# EUROPÄISCHE PATENTSCHRIFT

(11) **EP 2 667 988 B1**
(45) Veröffentlichungstag und Bekanntmachung des Hinweises auf die Patenterteilung: **07.04.2021**
(21) Anmeldenummer: 12704658.9
(22) Anmeldetag: 11.01.2012
(51) Int. Cl.: B22F 3/105, B29C 64/153, B33Y 10/00, B33Y 30/00, B33Y 50/02, B29C 64/268, B29C 64/393, G01N 25/72, B33Y 40/00

(54) **VERFAHREN UND VORRICHTUNG ZUR PROZESSÜBERWACHUNG**
METHOD AND DEVICE FOR PROCESS MONITORING
PROCÉDÉ ET DISPOSITIF DE SURVEILLANCE D'UN PROCESSUS

(30) Priorität: 28.01.2011 DE 102011009624
(43) Veröffentlichungstag der Anmeldung: 04.12.2013
(73) Patentinhaber: MTU Aero Engines AG, 80995 München (DE)
(72) Erfinder: SATZGER, Wilhelm, 80807 München (DE); SIKORSKI, Siegfried, 80997 München (DE); DUSEL, Karl-Heinz, 85716 Unterschleissheim (DE); MEIER, Wilhelm, 86456 Gablingen (DE); KOPPERGER, Bertram, 85221 Dachau (DE); WÄRMANN, Josef, 85777 Viehbach (DE); JAKIMOV, Andreas, 81245 München (DE); HERTTER, Manuel, 81247 München (DE); MELZER, Hans-Christian, 85305 Jetzendorf (DE); HESS, Thomas, 81541 München (DE)
(86) Internationale Anmeldenummer: PCT/DE2012/000020
(87) Internationale Veröffentlichungsnummer: WO 2012/100766

(56) Entgegenhaltungen:
- EP-A1- 1 815 936
- DE-A1- 10 310 385
- DE-A1-102004 017 769
- DE-A1-102007 056 984
- DE-T2- 60 108 390
- US-A- 6 046 426
- US-A- 6 122 564
- US-A1- 2009 206 065
- US-B1- 6 580 959
- Jean-Pierre Kruth ET AL: "On-line monitoring and process control in selective laser melting and laser cutting", Proceedings of the 5th Lane Conference, Laser Assisted Net Shape Engineering, vol. 1, 1 September 2007 (2007-09-01), page 23, XP055441994, ISBN: 978-3-87525-261-3
- Bharat Bhushan: "Chapter 2 - Surface Roughness Analysis and Measurement Techniques" In: "Modern Tribology Handbook Volume One", 28 December 2000 (2000-12-28), CRC Press ISBN: 978-0-8493-7787-7 pages 85-100,

## Beschreibung

Die Erfindung betrifft ein Verfahren zur Überwachung eines generativen Fertigungsprozesses nach dem Oberbegriff des Patentanspruchs 1.

Ein Verfahren und eine Vorrichtung zur generativen Herstellung eines Bauteils sind z. B. in dem deutschen Patent DE 196 49 865 C1 gezeigt. Das Bauteil wird in einem Bauraum aus einer Vielzahl von einzelnen Pulverschichten aufgebaut. Dabei wird ein Laserstrahl gemäß einer Querschnittsgeometrie eines dreidimensionalen Datenmodells über eine zu erzeugende Schicht geführt, die dann an einer vorhergehenden Pulverschicht fixiert wird. Die generative Herstellung eignet sich insbesondere zur Herstellung von Bauteilen mit komplexen Geometrien, jedoch erfolgt eine Überprüfung der Bauteileigenschaften bisher nur im Anschluss der Bauteilherstellung, wodurch verhältnismäßig hohe Kosten für Qualitätssicherungsmaßnahmen anfallen.

In jüngster Zeit ist jedoch verstärkt die Tendenz zu beobachten, den generativen Fertigungsprozess direkt und kontinuierlich zu überwachen. So wird beispielsweise in der DE 100 58 748 C1 eine Überwachung des Herstellungsprozesses unter Verwendung von optischen und thermischen Sensoren vorgeschlagen. In der Zeitschrift "rapidX", Zeitschrift für additive Fertigung, Carl Hanser Verlag, München, Ausgabe 1-2010 wird in dem Artikel "Fertigzum Abheben" ebenfalls eine direkte und kontinuierliche Uberwachung eines generativen Fertigungsprozesses erwähnt. Ebenso wird in dem Beitrag "Generative Verfahren Einsatz und Forschung" vom 29. April 2009 zum Kooperationsforum "Generative Fertigungstechnologien unter der Folienüberschrift "Schritte zur Qualifizierung des SLM-Prozesses" eine Prozessüberwachung mittels optischer Systeme genannt. Gemäß diesem Stand der Technik scheint eine direkte und kontinuierliche Uberwachung eines generativen Fertigungsprozesses wie einem selektiven Lasersintern (SLS) oder einem selektiven Laserschmelzen (SLM) per se bekannt zu sein, jedoch erfolgt keine Spezifizierung des jeweiligen Überwachungsprozesses. Weitere Beispiele aus dem Stand der Technik finden sich in der US 6 580 959 B1, US 6 122 564 A, US 2009/206065 A1, EP 1 815 936 A1, US 6 046 426 A, DE 10 2004 017769 A1; DE 10 2007 056984 A1, DE 601 08 390 T2 und DE 103 10 385 A1.

Der Erfindung liegt die Aufgabe zugrunde ein Verfahren zur Überwachung eines generativen Fertigungsprozesses vorzustellen das eine direkte und kontinuierliche Prozessüberwachung ermöglicht.

Diese Aufgabe wird gelöst durch ein Verfahren mit den Merkmalen des Patentanspruchs 1.

Bei einem erfindungsgemäßen Verfahren zur Überwachung eines generativen Fertigungsprozesses, bei dem ein Bauteil anhand eines dreidimensionalen Datenmodells aus einer Vielzahl von Schichten in einem Bauraum gebildet wird und eine nachfolgende Schicht an einer vorhergehenden Schicht mittels eines Hochenergiestrahls fixiert wird, werden erfindungsgemäß das Bauteil zumindest optisch und der Bauraum thermisch beim Schichtauftrag erfasst. Erfindungsgemäß erfolgt eine Umrisserkennung durch eine optische 2D-Vermessung nach der zuletzt erzeugten Schicht und eine optische 2D-Vermessung nach dem Aufbringen eines Pulvers. Hierdurch kann ein Einzelverzug jeder Schicht erfasst und die jeweilige Strahlführung bei der folgenden Schicht entsprechend angepasst werden. Die Umrisserkennung erfolgt im Rahmen einer 2D-Bildverarbeitung. Durch die 2D-Untersuchung nach dem Auftragen des Pulvers, jedoch vor dem Sintern bzw. Aufschmelzen, können Poren detektiert und beseitigt werden. Die erfindungsgemäße Lösung ermöglicht eine direkte und kontinuierliche und somit Online- bzw. Echtzeit-Prozessüberwachung, wodurch Information über jede hergestellte Schicht des Bauteils erfasst werden. Dabei können durch die zumindest optische Überwachung der jeweiligen Schicht bzw. des jeweiligen Schichtabschnitts in Kombination mit der thermischen Überwachung des Bauraums Wechselwirkungen zwischen dem Bauteil und dem Bauraum erkannt werden. Am Ende des Fertigungsprozesses kann eine detaillierte Aussage über den Zustand bzw. die Eigenschaften des gefertigten Bauteils und somit über dessen Qualität getroffen werden. Nachträgliche Arbeitsschritte zur Qualitätssicherung erübrigen sich somit. Kosten für die nachträgliche Qualitätssicherung werden vollständig eliminiert. Die Informationen über das Bauteil sind dabei lückenlos verfügbar, so dass die Qualität jeder einzelnen Schicht bzw. jedes einzelnen Schichtabschnitts erfasst wird.

Bei einem bevorzugten Ausführungsbeispiel werden die erfassten Daten während des Fertigungsprozesses bewertet und beim Überschreiten einer jeweiligen maximal zulässigen Abweichung Prozessparameter entsprechend geändert. Hierdurch wird der laufende Herstellungsprozess in Echtzeit nachgeregelt, wodurch das Bauteil in optimaler Qualität erstellt werden kann. Somit wird ausgeschlossen, dass sich bspw. Bindungsfehler über das gesamte Bauteil ausbreiten.

Alternativ bzw. ergänzend kann eine Farbanalyse der zuletzt erzeugten Schicht durchgeführt werden, wodurch beispielsweise Fremdpartikel erfasst werden können.

Bei einer Verfahrensvariante wird nach der zuletzt gefertigten Schicht hinsichtlich ihrer Beschaffenheit bzw. Eigenschaften wie Bindungsfehler, Schichtdicke und Fremdpartikel untersucht.

Dies kann beispielsweis mittels einer thermischen Analyse basierend auf Methoden und Mitteln der Thermografie erfolgen. Erfolgt die Thermografische Untersuchung nach dem Auftragen des Pulvers jedoch vor dem Sintern bzw. Aufschmelzen, so können Fremdpartikel detektiert werden. Liegen Fremdpartikel vor so kann die Pulverlage einfach abgezogen werden.

Die Erfassung der Beschaffenheit der jeweiligen Schicht kann auch bzw. ergänzend zur thermischen Analyse mittels von der Schicht reflektierten Lichtes erfolgen. Dies kann beispielsweise mittels einer Lichtquelle zur Aussendung von Lichtwellen und mit einem Lichtsensor zur Erfassung des reflektierten Lichts durchgeführt werden.

Die Beschaffenheit der zuletzt erzeugten Schicht kann auch mittels Wirbelströmen erfasst werden. Dies kann beispielsweise durch Wirbelstromsensoren erfolgen und eignet sich insbesondere bei ebenen Schichten.

Bei einem Ausführungsbeispiel wird ein von dem Hochenergiestrahl erzeugtes Schmelzbad thermisch erfasst, so dass kontrolliert werden kann, ob der Hochenergiestrahl hinsichtlich seiner Paramater wie Leistung, Strahldurchmesser, Vorschub optimal eingestellt ist. Diese thermische Überwachung kann beispielsweise durch eine Verfolgung der Temperatur des Schmelzbades beim Energiestrahlauftreffpunkt mit Hilfe eines nachsteuernden Pyrometers erfolgen.

Bei einem Ausführungsbeispiel wird das Bauteil nach seiner Herstellung bzgl. seines gesamten Verzugs erfasst. Dies kann über eine optische 3D-Vermessung des gefertigten Bauteils im Rahmen einer 3D-Bildverarbeitung erfolgen.

Eine Verfahrensvariante ermöglicht eine Klassifizierung von Schichtmaterial in Echtzeit, auf der dann aufbauend Prozessparameter eingestellt werden bzw. eine Parametersteuerung erfolgt. Bei Verwendung eines Pulvers als Schichtmaterial können somit Schwankungen in der Pulverqualität während des Fertigungsprozesses durch angepasste Prozessparameter ausgeglichen werden.

Eine erfindungsgemäße Durchführung eines derartigen Verfahrens hat zumindest eine optische Erfassungseinrichtung zur optischen Erfassung zumindest einer Bauteilschicht und zumindest eine thermische Erfassungseinrichtung zur thermischen Erfassung eines das Bauteil aufnehmenden Bauraums. Eine derartige Vorrichtung ermöglicht eine direkte und kontinuierliche Überwachung sämtlicher Bauteilschichten und eine Steuerung und Regelung von Prozessparametern.

Sonstige vorteilhafte Ausführungsbeispiele der Erfindung sind Gegenstand weiterer Unteransprüche.

Bei einem bevorzugten erfindungsgemäßen Verfahren wird ein Bauteil schichtweise aus einer Vielzahl von Schichten, vorzugsweise aus einem Pulvermaterial, in einem Bauraum gebildet. Dabei wird ein Hochenergiestrahl wie ein Laser- oder ein Elektronenstrahl entsprechend einer Querschnittsgeometrie eines dreidimensionalen Datenmodells über eine zu verfestigende Schicht geführt, die beim Verfestigen an der vorhergehenden Schicht fixiert wird. Beim Auftreffen des Hochenergiestrahls wird ein Schmelzbad gebildet und die zu verfestigende Schicht wird partiell aufgeschmolzen. Nach einer Weiterführung des Hochenergiestrahls kühlt der aufgeschmolzene Schichtabschnitt ab und ist an einem vorhergehenden Schichtabschnitt bzw. der vorhergehenden Schicht fixiert. Die darunter liegende Schicht wird zumindest teilweise erneut geschmolzen, es entsteht eine durchgehende Schweißverbindung.

Zur Überwachung des Fertigungsprozesses werden das Bauteil optisch sowie thermisch und der Bauraum thermisch beim Schichtauftrag erfasst. Eine optische Erfassung kann zum Beispiel mittels einer optischen Kamera erfolgen, deren aufgezeichnetes Bild dann zur Bewertung mit einem Soll-Bild der zuletzt erzeugten Schicht überlagert wird. Eine thermische Erfassung kann zum Beispiel mittels einer Wärmebildkamera erfolgen, bei der die von dem Bauraum abgegebene Wärmestrahlung im Infrarotbereich erfasst wird, die im Wesentlichen von dem in den Bauraum positionierten Bauteil bzw. Bauteilabschnitt und dem Hochenergiestrahl bestimmt wird. Die erfassten Ist-Daten über den Zustand der aufgebrachten Bauteilschicht und des Bauraums werden mit hinterlegten Soll-Daten verglichen. Beim Überschreiten einer jeweiligen maximal zulässigen Abweichung wird aktiv in die Prozesssteuerung eingegriffen und Prozessparameter werden entsprechend geändert. So kann zum Beispiel bei einem zu hohen Temperaturgradienten innerhalb des Bauteils der Schichtauftrag, der Hochenergiestrahl bzgl. seiner Parameter wie Leistung, Strahldurchmesser und Vorschub entsprechend geändert werden. Ebenso kann eine Vorwärmung des Pulvers auf eine bestimmte Temperatur zum Auftrag an die ermittelten Ist-Daten angepasst werden. Des Weiteren wird zur Einstellung der Prozessparameter die Qualität des Pulvers an sich erfasst und ausgewertet.

Erfindungsgemäß wird eine 2D-Bildverarbeitung der zuletzt erzeugten Schicht zur Erkennung ihrer Umrisse durchgeführt. Bei einem ermittelten Schichtverzug außerhalb vorgebender Toleranzgrenzen wird zumindest die Führung des Hochenergiestrahls entsprechend angepasst. Zusätzlich erfolgt eine thermische Analyse der zuletzt erzeugten Schicht beispielsweise mit Hilfe der Thermografie zur Messung der jeweiligen Schichteigenschaften wie Bindungsfehler innerhalb der Schicht, Bindungsfehler zur vorhergehenden Schicht, Schichtdicke sowie in der Schicht eingebundene Fremdpartikel. Des Weiteren wird die zuletzt erzeugte Schicht mit Licht bestrahlt und das reflektierte Licht zur Ermittlung von Fremdpartikeln und Verarbeitungsfehlern kontinuierlich erfasst und ausgewertet. Wenn es sich bei der zuletzt erzeugten Schicht um eine ebene Schicht handelt, wird ihre Beschaffenheit bzw. ihr Aufbau zusätzlich mittels Wirbelströmen erfasst und entsprechend ausgewertet.

Nach der Erzeugung des Bauteils wird eine optische 3D-Vermessung durchgeführt. Dabei wird zur Erkennung eines Bauteilverzuges seine Außengeometrie vollumfänglich erfasst.

Zusätzlich wird während des Fertigungsprozesses die Temperatur des Schmelzbades beim Auftreffen des Hochenergiestrahls auf die jeweilige Schicht mit Hilfe eines dem Hochenergiestrahl nachsteuernden Pyrometers beobachtet.

Eine erfindungsgemäße nicht beanspruchte Vorrichtung zur Durchführung einer derartigen Prozessüberwachung weist zumindest eine optische Erfassungseinrichtung wie eine optische Kamera zur Erfassung einer Bauteilschicht bzw. des gesamten Bauteils sowie eine thermische Erfassungseinrichtung wie eine Wärmebildkamera zur thermischen Erfassung des Bauraums auf. Darüber hinaus hat die Vorrichtung einen dem Hochenergiestrahl nachsteuerbaren Pyrometer, eine Lichterfassungseinrichtung mit einer Lichtquelle zur Aussendung von Lichtwellen in Richtung der zuletzt erzeugten Schicht und mit einem Lichtsensor zur Erfassung des reflektierten Lichtes, sowie einen Wirbelstromsensor zum Erfassen des jeweiligen Schichtaufbaus. Offenbart ist ein Verfahren zur Überwachung eines generativen Fertigungsprozesses in Echtzeit, wobei ein Bauteil zumindest optisch und der Bauraum thermisch beim Schichtauftrag erfasst werden, sowie eine Vorrichtung zur Durchführung eines derartigen Verfahrens.

## Patentansprüche

1. Verfahren zur Überwachung eines generativen Fertigungsprozesses, bei dem ein Bauteil anhand eines dreidimensionalen Datenmodells aus einer Vielzahl von Schichten in einem Bauraum gebildet wird, wobei eine nachfolgende Schicht an einer vorhergehenden Schicht mittels eines Hochenergiestrahls fixiert wird, wobei
das Bauteil optisch und der Bauraum thermisch beim Schichtauftrag erfasst werden, wobei
eine Umrisserkennung nach der zuletzt erzeugten Schicht erfolgt, wobei ein Einzelverzug jeder Schicht erfasst und die jeweilige Strahlführung bei der folgenden Schicht entsprechend angepasst werden,
**dadurch gekennzeichnet, dass**
eine optische 2D-Vermessung nach dem Aufbringen eines Pulvers erfolgt und die Umrisserkennung im Rahmen einer 2D-Bildverarbeitung einer optischen 2D-Vermessung erfolgt.

2. Verfahren nach Anspruch 1, wobei eine Farbanalyse der zuletzt erzeugten Schicht durchgeführt wird, um Fremdpartikel zu erfassen.

3. Verfahren nach einem der vorhergehenden Ansprüche, wobei von der zuletzt erzeugten Schicht reflektiertes Licht erfasst wird.

4. Verfahren nach einem der vorhergehenden Ansprüche, wobei die Beschaffenheit der zuletzt erzeugten Schicht mittels Wirbelströmen erfasst wird.

5. Verfahren nach einem der vorhergehenden Ansprüche, wobei ein vom Hochenergiestrahl erzeugtes Schmelzbad thermisch erfasst wird.

## Claims

1. Method for monitoring an additive manufacturing process in which a component is formed in an assembly space from a plurality of layers using a three-dimensional data model, a subsequent layer being fixed to a previous layer by means of a high energy beam, the component being detected optically and the assembly space being detected thermally when the layers are being applied, contour detection being carried out on the basis of the layer produced last, individual distortion of each layer being detected and the beam control for the following layer being adapted accordingly, **characterized in that** an optical 2D measurement is carried out after a powder has been applied and the contour detection is carried out as part of 2D image processing of an optical 2D measurement.

2. Method according to claim 1, wherein a color analysis of the layer produced last is carried out in order to detect foreign particles.

3. Method according to either of the preceding claims, wherein light reflected from the layer produced last is detected.

4. Method according to any of the preceding claims, wherein the state of the layer produced last is detected by means of eddy currents.

5. Method according to any of the preceding claims, wherein a melt pool generated by the high energy beam is thermally detected.

## Revendications

1. Procédé de surveillance d'un processus de fabrication additive, dans lequel un composant est formé à l'aide d'un modèle de données tridimensionnel à partir d'une pluralité de couches dans un espace de construction, une couche suivante étantfixée à une couche précédente au moyen d'un faisceau à haute énergie,
le composant étant détecté optiquement et l'espace de construction étant détecté thermiquement lors de l'application des couches,
une détection de contourayant lieu après la production de la dernière couche,
une distorsion individuelle de chaque couche étant détectée et le guidage de faisceau respectif étant adapté de manière correspondante pour la couche suivante,
**caractérisé en ce que**
une mesure optique 2D a lieu après l'application d'une poudre
et la détection de contour a lieu dans le cadre d'un traitement d'image 2D d'une mesure optique 2D.

2. Procédé selon la revendication 1, une analyse de couleur de la dernière couche produite étant effectuée afin de détecter des particules étrangères.

3. Procédé selon l'une des revendications précédentes, la lumière réfléchie par la dernière couche produite étant détectée.

4. Procédé selon l'une des revendications précédentes, l'état de la dernière couche produite étant détecté au moyen de courants de Foucault.

5. Procédé selon l'une des revendications précédentes, un bain de fusion produit par un faisceau à haute énergie étant détecté thermiquement.
